# EUROPEAN PATENT SPECIFICATION

(11) **EP 3 290 287 B1**
(45) Date of publication and mention of the grant of the patent: **07.07.2021**
(21) Application number: 16001884.2
(22) Date of filing: 29.08.2016
(51) Int. Cl.: B61D 17/22, B60D 5/00

(54) **CORNER PANEL MEMBRANE FOR A BELLOWS MEMBRANE FOR A GANGWAY, BELLOWS MEMBRANE FOR A GANGWAY AND GANGWAY**
ECKPANEELMEMBRAN FÜR EINE BALGMEMBRAN FÜR EINE GANGWAY, BALGMEMBRAN EINER GANGWAY UND GANGWAY
MEMBRANE DE PANNEAU DE COIN D'UN SOUFFLET À MEMBRANE DESTINÉ À UNE PASSERELLE, MEMBRANE DE SOUFFLET DE PASSERELLE ET PASSERELLE

(43) Date of publication of application: 07.03.2018
(73) Proprietor: Dellner Couplers AB, 791 95 Falun (SE)
(72) Inventor: SMITH, Graham, Gloucestershire GL12 7DH (GB)
(74) Representative: Tilmann, Max Wilhelm

(56) References cited:
- EP-A2- 1 410 979
- EP-B1- 0 544 203
- CA-A1- 2 858 516
- DE-A1- 3 035 159
- DE-U1-202013 000 165
- None

## Description

The invention relates to a corner membrane for a bellows membrane for a gangway, a bellows membrane for a gangway and a gangway.

Gangways are known for multiple purposes and in multiple designs. Gangways are often used to connect a first car of a multi-car vehicle with a second car of said vehicle in order to allow passengers to pass from the first car to the second car, while the vehicle is travelling. Such multi-car vehicles might be trains or might be busses. Gangways are also known at airports, where they are used in order to connect the airport terminal with the airplane. Similarly, gangways are used at harbors to connect a building at the pier with a ship in order to allow passengers to walk from the building to the ship. Further uses of gangways are also known.

In the past, gangways predominantly had a structure like the one described in EP 0 544 203 B1. As can be seen in Fig. 4 of EP 0 544 203 B1, a first flat strip of a bellows membrane 4a together with a second strip of a bellows membrane 4b forms a "V", whereby the tip of the "V" is connected by way of a frame 17. Similarly, two bordering "V"s are connected by a further frame 18. The frames 17 and 18 are trough-shaped profiles from aluminium, which interconnect two bellows strips by way of crimping. Fig. 5 of EP 0 544 203 B1 shows a different design, wherein the membrane stripes are not zigzag-shaped troughs. Here, the membrane strips have a cross section of a semicircle bent out of one membrane strip. Two neighboring semicircles are interconnected at their edges by way of a crimping profile, for example the frame 19.

From CA 2 858 516 A1 it is known to provide a corner panel membrane for a bellows membrane for a gangway, the corner panel membrane having at least one attachment section for attaching the corner panel membrane to a supporting structure of the gangway.

Bellows of this type have impermeability problems. Since the gangway is made up of several membranes (membrane strips) that are held together by the crimping profiles, the risk arises that gas or liquid enters into the gangway at the portion where the respective edges of the material strips abut against each other in the crimping profile. Additionally, such gangways are difficult to assemble, as each material strip needs to be crimped together with the neighboring material strip by way of the crimping profile.

From DE 30 35 159 A1 a bellows for a gangway is known that is made from two gaiter-halfs that are interconnected to each other by one intermediate piece at the top. Alternatively, DE 30 35 159 A1 describes the bellows to be made up of one single, continues fabric-sheet as is shown in figure 3 of DE 30 35 159 A1.

EP 1 410 979 A2 discloses an articulated tunnel, said tunnel interconnects front and rear enclosures of a vehicle in end-two-and relation to one another. As can be seen from Figure 23 to 24, the tunnel walkway is made up of individual segments stitched together.

From DE 20 2013 000 165 U1 a gangway with a bellows is known. The bellows is made up of individual pieces that are interconnected to each other by a frame 15a. DE 20 2013 000 165 U1 discloses a sleeve to be pulled over the bellows of the gangway.

Given this background, it is an object of the invention to suggest a way for an easier assembly of a gangway or a way to improve the gas tightness or liquid tightness of a gangway.

This object is solved by a corner panel membrane for a bellows membrane for a gangway according to claim 1, a bellows membrane for a gangway according to claim 7 and a gangway according to claim 9. Preferred embodiments of the invention are described in the subordinate claims and the description following hereafter.

The invention has the general concept to provide for means for allowing the bellows of a gangway to be made up from as few strips of material as possible, preferably for the bellows of a gangway to be made up from one continuous, single bellows membrane. By decreasing the number of connections needed to put together the bellows of the gangway, the more the risk is reduced of gas or liquid entering into the gangway at these connections. By decreasing the number of connections needed the steps necessary to assemble the gangway are also reduced.

The invention has identified the corners of a gangway to be crucial points for putting into practice this idea. As can be seen from Fig. 5 or 6 of EP 0 544 203 B1 bellows often are made up of a sequence of bellows membranes (stripes of material) that each are arranged in a trough-shape (half the cross section of a semicircle). In arrangements like this, it is difficult to bring the material around a corner (to let the trough be arranged in an arc-shape) as the sections of material that are more inwards (more towards the center point around which the arc is shaped) need to be specially treated to handle the excess material that would be present as the material is gathered at the more inside parts of the arc in order to allow the trough to take up the arc-shape.

The invention addresses this issue by providing a corner panel membrane for a bellows membrane for a gangway. A corner panel membrane is understood to be the membrane (the sheet, the cloth, the textile, the flat and flexible object) that forms that part of the bellows membrane for a gangway that is to be arranged at the corners of the gangway.

The corner panel membrane has a least one attachment section for attaching the corner panel membrane to a supporting structure of the gangway. The term "section" in the term "attachment section" is not to be limited to the idea of a part from the corner panel membrane that can be separated from the rest of the corner panel membrane. The term "section" in the term "attachment section" is simply used to describe a certain area/a certain part of the corner panel membrane, it being possible and falling within the concept of this invention for this area/part being an area/a part of a one-piece body, for example a body that in a preferred embodiment is produced by way of moulding.

The corner panel membrane has within the attachment section a spine section extending in a longitudinal direction. The term "spine section" is not to be limited to a certain geometric shape for the broadest concept of the invention and does not require the spine section to be reinforced by any specific element. The term "spine section" is simply used to describe an area of the corner panel membrane. As will be described further below, thicker sections of the membrane propagate from the spine section in a direction perpendicular to the longitudinal direction of the spine and preferable propagate from the spine on both sides of the spine, which gives this preferred embodiment a certain resemblance to a frontal view onto a rib cage. It is for this reason only that the term "spine section" is used, while it is emphasized that the use of the term "spine section" is not made to limit the invention to such embodiments and that the spine section can have any geometric shape that extends in a longitudinal direction.

The attachment section of the corner panel membrane has thicker sections. In these thicker sections the corner panel membrane has a first thickness. The thicker sections border the spine section and propagate in a direction perpendicular to the longitudinal direction of the spine section. In a preferred embodiment, the spine section has the same thickness as the thicker sections or at least in those sections of the spine section that border the thicker sections has the same thickness as the thicker sections so that in a preferred embodiment there is no step in the thickness between the thicker sections and the spine section. In an alternative embodiment, the spine section or at least parts of the spine section have a smaller thickness than the thicker sections. This might either be achieved by having a step in the membrane thickness between the thicker section and the spine section. Alternatively, this might be achieved by designing the spine section and the thicker sections to have the same thickness at the place where the thicker section borders the spine section and to allow the thickness of the spine section to drop in those parts of the spine section that are further away from the border with the thicker sections. The drop of thickness of the spine section may be gradual, starting from the thickest part of the spine section being at the border to the thicker section and the thickness gradually dropping along the propagation of the spine section away from the border with the thicker section.

The attachment section of the corner panel membrane also has slimmer sections. The slimmer sections have a second thickness that is smaller than the first thickness. The slimmer sections also propagate in a direction perpendicular to the longitudinal direction of the spine section.

According to the invention, the width of the thicker section, which is understood to be the extent of the thicker section in the direction of the longitudinal direction of the spine section is larger closer to the spine section than further away from the spine section. The inventors have found that such an arrangement allows for the corner panel membrane to be more easily bent around a corner. The thicker sections will give the material the general structure of the desired bend, while the slimmer sections allow for the material to double up in between the thicker sections as the corner panel membrane is bent. By choosing particular geometric shapes of the thicker sections and slimmer sections, different three-dimensional designs will be taken up by the corner panel membrane as it is bent.

The corner panel membrane can be a piece that is made from a single material. The corner panel membrane can for example be made from rubber, for example can be made by moulding rubber into the shape of a membrane, whereby the spine section, the thicker sections and the slimmer sections are created while moulding the rubber into the membrane. The corner panel membrane can also be made from textile, whereby the spine section, the thicker sections and the slimmer sections are produced by using more or less textile material in the respective sections of the membrane. In a preferred embodiment, the corner panel membrane is a multi-layer membrane, for example a membrane with two layers or with three layers or a membrane with more than three layers, whereby the corner panel membrane does not need to have all layers throughout its extent. The corner panel membrane may, for example, comprise a top layer and a bottom layer and may in parts of the membrane, for example in the part where the thicker sections are to be created, have a further layer, for example a layer of cardboard that has the geometric shape of the thicker section that is to be created inserted between the top layer and the bottom layer, hence forming a corner panel membrane that for parts of its extent is a two-layer membrane and for parts of its extent is a three-layer membrane. The thicker section can also be created by over moulding or embossing or laminating.

In a preferred embodiment, reinforced silicone rubber is used as material for the corner panel membrane, but other types of rubber could also be used. The fabric reinforcement could be one of a variety of different types of material i.e. nylon, polyester, nomex etc. In a preferred embodiment the corner panel membrane is compression moulded though it could be created by vacuum moulding or rotacuring or other moulding means. In a preferred embodiment a laminate of uncured rubber and fabric that comprises the 'blank' that is loaded into the tool has uniform cross section, with the moulding process causing the variations in thickness to be formed. This is to make the process as simple as possible to ease manufacture. It is also possible that the tool is loaded with separate pieces of fabric reinforcement and uncured rubber.

In a preferred embodiment, the spine section is a rectangular section.

In an also preferred embodiment, the spine section has the shape of two trapezes, the larger basis of the trapezes bordering each other and forming the middle of the spine section with regard to the longitudinal extent of the spine section. In an also preferred embodiment, the spine section has the shape of two triangles, the larger basis of the triangles bordering each other and forming the middle of the spine section with regard to the longitudinal extent of the spine section.

In a preferred embodiment, a thicker section has the same thickness throughout this individual section. Embodiments are, however, also feasible, wherein the thickness of the thicker section changes throughout the section. In a preferred embodiment, the thickness of an individual thicker section is constant, the specific thickness lying preferably within the range of 0,5 to 10mm, especially preferred 1 to 8mm, especially preferred within the range of 2mm to 5 mm. Embodiments are feasible, where the thickness of a thicker section gets smaller as the thicker section propagates from the spine section, the thicker section having its maximum thickness closest to the spine section. In a preferred embodiment, the thickness of an individual thicker section varies, but lies preferably within the range of 0,5 to 10mm, especially preferred 1 to 8mm, especially preferred within the range of 2mm to 5 mm.

In a preferred embodiment, all thicker sections of an attachment section have the same thickness or thickness profile. In an alternative embodiment, the thicker section of an attachment section that are arranged closer to an end of the spine section in the longitudinal direction of the spine section are slimmer than thicker sections that are arranged closer towards the middle of the spine section in the longitudinal direction of the spine section.

In a preferred embodiment, each slimmer section has at least one border at which it borders a thicker section. In a preferred embodiment, there is a step in thickness at this border. In a preferred embodiment, the step has a height of 0,5mm to 2mm.

In a preferred embodiment, a slimmer section has the same thickness throughout this individual section. Embodiments are, however, also feasible, wherein the thickness of the slimmer section changes throughout the section. In a preferred embodiment, the thickness of an individual slimmer section is constant, the specific thickness lying within the range of 0.1mm to 1mm, preferably from 0,2mm to 0,8mm and especially preferred from 0,3mm to 0,6mm mm. In a preferred embodiment, the thickness of an individual slimmer section varies, but lies within the range of 0.1mm to 1mm, preferably from 0,2mm to 0,8mm and especially preferred from 0,3mm to 0,6mm mm.

In a preferred embodiment, an attachment section has slimmer sections that propagate in a direction perpendicular to the longitudinal axis of the spine section arranged on a first side of the spine section and has slimmer sections that propagate in the opposite direction (and also perpendicular to the longitudinal direction of the spine section) arranged on the opposite side of the spine section.

In a preferred embodiment, an attachment section has thicker sections that propagate in a direction perpendicular to the longitudinal axis of the spine section arranged on a first side of the spine section and has thicker sections that propagate in the opposite direction (and also perpendicular to the longitudinal direction of the spine section) arranged on the opposite side of the spine section.

In a preferred embodiment the thickest thickness of a slimmer section is smaller than the slimmest thickness of a thicker section.

In a preferred embodiment, the attachment section is designed symmetrically, preferably mirror-symmetrically about a line of symmetry that extends in the longitudinal direction of the spine section.

In a preferred embodiment, the width of the slimmer section, which is understood to be the extent of the slimmer section in the direction of the longitudinal direction of the spine, is smaller closer to the spine than further away from the spine.

In a preferred embodiment, the slimmest part of the slimmer section with regard of its width borders the spine section. In an alternative embodiment, the thicker sections of the corner panel membrane are arranged to border the spine section and at the same time for one thicker section to border directly to the next thicker section at their border with the spine section. This leaves no room for the slimmer section to border the spine section. The starting point of the slimmer section would thus be further away from the spine section in the direction perpendicular to the longitudinal direction of the spine section. In a preferred embodiment, when viewed in the longitudinal direction of the spine section at least parts of the slimmer sections interlace with parts of the thicker sections.

In a preferred embodiment, the thicker sections have the shape of a trapeze. In an alternative, equally preferred embodiment, the thicker sections have the shape of a triangle. In a preferred embodiment, all thicker sections of an attachment section have the same geometric shape, for example all thicker sections have the shape of a trapeze or all thicker sections have the shape of a triangle. Embodiments of the invention can be thought of, where thicker sections have the same geometric shape, but are of different size. For example, all thicker sections might have the shape of a triangle, whereby at least one thicker section is a larger triangle than another thicker section. In an especially preferred embodiment, all thicker sections of an attachment section that are arranged on one side of a spine section have the same geometric shape and same size. In an especially preferred embodiment all thicker sections of an attachment section have the same geometric shape and same size.

In a preferred embodiment, the slimmer sections have the shape of a trapeze. In an alternative, equally preferred embodiment, the slimmer sections have the shape of a triangle. In a preferred embodiment, all slimmer sections of an attachment section have the same geometric shape, for example all slimmer sections have the shape of a trapeze or all slimmer sections have the shape of a triangle. Embodiments of the invention can be thought of, where slimmer sections have the same geometric shape, but are of different size. For example, all slimmer sections might have the shape of a triangle, whereby at least one slimmer section is a larger triangle than another slimmer section. In an especially preferred embodiment, all slimmer sections of an attachment section that are arranged on one side of a spine section have the same geometric shape and same size. In an especially preferred embodiment all slimmer sections of an attachment section have the same geometric shape and same size.

In a preferred embodiment, more than two, preferably more than three and especially preferred more than four thicker sections are arranged on one side of a spine section, especially with the thicker sections neighbouring each other and extending along parallel lines, which are each perpendicular to the longitudinal line of the spine section. Especially not more than 20, especially not more than 10 thicker sections are arranged on one side of a spine section.

In a preferred embodiment, the slimmer sections border a larger section of slim thickness. The larger section of slim thickness preferably extends parallel to the spine section and could be considered as a second spine section in the sense that the thicker sections propagate in a direction perpendicular to the longitudinal direction of the spine section described above, the widths of the thicker sections being larger closer to the above described spine section, while the slimmer sections propagate in a direction perpendicular to the longitudinal direction of the larger section of slim thickness ("second spine section"), the widths of the slimmer sections being larger closer to the above larger section of slim thickness than further away from the larger section of slim thickness.

In a preferred embodiment, the thickness of the larger section of slim thickness is the same as the thickness of the slimmer sections. Embodiments are also feasible, where the thickness of the slimmer section partially is slimmer than the thickness of the slimmer sections. These even slimmer parts of the larger section of slim thickness can facilitate the arrangement of parts of the larger section of slim thickness inside a profile of a support structure of a gangway.

In a preferred embodiment, the corner panel membrane is produced by moulding, especially preferred by compression moulding or especially preferred by vacuum moulding.

In a preferred embodiment, the corner panel membrane has two attachment sections. In an especially preferred embodiment, the corner panel membrane has three attachment sections. In an especially preferred embodiment, the corner panel membrane has more than three attachment sections. In an especially preferred embodiment, the corner panel membrane has for our five attachment sections.

In a preferred embodiment, the corner panel membrane has the general shape of a rectangle.

In a preferred embodiment, a ledge (a rim) is attached to the spine section, which extends along the longitudinal direction of the spine section and protrudes from the spine section perpendicular to the longitudinal axis and perpendicular to the direction of extension of the thicker sections. In a preferred embodiment, the ledge has a cross section in a plane perpendicular to the longitudinal direction of the spine section in the shape of a rectangle, the rectangle standing on the spine section. The ledge can be used to increase the stiffness of the spine section so that when the corner is bent around the typical 90 degree corner, it forms a better radius.

The bellows membrane for a gangway according to the invention has a corner panel membrane according to the invention and at least one additional panel of the bellows membrane that borders the corner panel membrane.

A bellows membrane for a gangway is to be understood as the material that forms a bellows of a gangway or at least that forms a part of the bellows of the gangway.

In a preferred embodiment, the bellows membrane for the gangway according to the invention is a bellows membrane that can be used to fully encompass the gangway, while in order to build the gangway, opposing sides of the bellows membrane are connected to each other, like shown in Fig. 3 of EP 0 544 203 B1 at the underside of the gangway. In a preferred embodiment, the bellows membrane therefore has four corner panels with additional panels that can make up the side panels, the top panel or the bottom panel of a bellows being attached to the corner panels. In a preferred embodiment, the bellows membrane has a first partial bottom panel being attached to a first corner panel, whereby the first corner panel on its opposite side borders a first side panel, while the first side panel on its opposite side borders a second corner panel, while the second corner panel at its opposite side borders a top panel, while the top panel on its opposite side borders a third corner panel, while the third corner panel on its opposite side borders a second side panel, whereby the second side panel on its opposite side borders a fourth corner panel, while the fourth corner panel on its opposite side borders a second partial floor panel.

In a preferred embodiment, the bellows membrane may be completely made as one piece, for example by way of moulding. In an alternative, the corner panels are attached to the additional panels that border the respective corner panel by way of bonding with adhesive as this provides both mechanical attachment and also provides a leak proof joint, thereby eliminating the need to have later sealing operations. It would also be possible to vulcanise the additional panels to the corner panel membrane to achieve the same result. They could be sewn together and then sealed afterwards but this is less attractive. It would be possible using a process such as rotacure to manufacture the entire bellows - sides, top, bottom and moulded corners as a long single piece with only a need to join the two ends together at the bottom of the bellows. It would also be possible to compression mould the corner piece with the edges of the adjacent side and top inserted into the mould tool to simultaneously mould and vulcanise in the side and top.

In a preferred embodiment, the additional panel that borders the corner panel membrane is made of the same material as the corner panel membrane, for example of the same multi-layer material that the corner panel membrane can be made of. In an alternative embodiment, the additional panel is made of a different material compared to the material of which the corner panel membrane is made of. The additional panels may use the same rubber and the same type of fabric but of a thicker or slimmer form, or with a different cross section for example two layers of fabric for increased stiffness, or the fabric may be of a different material, or the hardness of the rubber may be different for example. A different type of rubber may be used provided that an effective leak-proof seal can be made between the corner and the dissimilar rubber material side panel.

The gangway according to the invention has a support structure for a bellows membrane and the bellows membrane according to the invention that is attached to the support structure.

Gangways with bellows that have trough-shaped corners often have either of two arrangements of the support structure and the bellows. In one arrangement, the support structure is arranged more towards the inside of the gangway and the bellows membrane bulges towards the outside forming troughs that are open towards the inside. In this arrangement, the circumferential lengths of the ground of the arc-shaped trough that makes up the corner is longer than the rim part of the trough that is attached to the support structure.. In another arrangement, the support structure is arranged more towards the outside of the gangway and the bellows membrane bulges towards the inside forming troughs that are open towards the outside. Here the trough is bend backwards to form the corner. In this arrangement, the circumferential lengths of the ground of the arc-shaped trough that makes up the corner is smaller than the rim part of the trough that is attached to the support structure.

In a preferred embodiment, the support structure has a corner profile and the slimmer section of the corner panel membrane or the above described larger section of slim thickness is attached to the corner profile. In a preferred embodiment, the slimmer section of the corner panel membrane or the above described larger section of slim thickness is attached to the corner profile by way of material from the corner panel membrane being inserted into a recess of the corner profile. In a preferred embodiment, the corner profile has a C-shaped cross-section, whereby a part of the slimmer section or a part attached to the slimmer section of the corner panel membrane or a part of the above described larger section of slim thickness is arranged inside the corner profile, which can then be closed on the corner panel membrane to trap it in place. This arrangement is especially suitable for the embodiment of a gangway, where the support structure is arranged more towards the inside of the gangway and the bellows membrane bulges towards the outside forming troughs that are open towards the inside.

In a preferred embodiment, the support structure has a corner profile and the spine of the corner panel membrane is attached to the corner profile. In a preferred embodiment, the spine of the corner panel membrane is attached to the corner profile by way of material from the corner panel membrane being inserted into a recess of the corner profile. In a preferred embodiment, the corner profile has a C-shaped cross-section, whereby a part of the spine or a part attached to the spine of the corner panel membrane is arranged inside the corner profile, which can then be closed on the corner panel membrane to trap it in place. This arrangement is especially suitable for the embodiment of a gangway, where the support structure is arranged more towards the outside of the gangway and the bellows membrane bulges towards the inside forming troughs that are open towards the outside.

In a preferred embodiment, the corner profile is a section of a hoop. In a preferred embodiment, the hoop is from extruded aluminium. In a preferred embodiment, the support structure for the bellows membrane is made up of several hoops, especially preferred more than two hoops, especially preferred more than three hoops and especially preferred around 4 to 5 hoops. In a preferred embodiment, the corner panel membrane has the same number of attachment sections than the gangway has hoops.

In a preferred embodiment, each corner of the gangway has one, preferably only one respective corner panel membrane. A corner of a gangway is understood to be the transition area from a side panel of the gangway to a top panel or a floor panel of the gangway. Typically, gangways have rectangular or trapezoidal cross-section and thus typically have four corners.

A gangway that has a support structure and a bellows attached to the support structure can be made up of a continuous bellows membrane. A continuous bellows membrane is understood to be a membrane without parts being stitched together or with individual strips of material being crimped together. The continuous bellows membrane is either achieved by a unitary production method, for example by way of moulding the bellows membrane as such or by way of gluing individual panels of a membrane together to form a continuous bellows membrane that has no holes or stitches.

In a preferred embodiment, the bellows is not coated with a coat after it has been attached to the support structure. It is necessary to seal sewn seams to make them watertight, and where there are crimped together convolutes there are the possibilities of leak paths especially where sides are joined to corners and there are steps in the material thickness due to overlap joints. Also for high speed train applications, customers require gangways that are pressure sealed to guard against pressure pulses, therefore a bellows made without seams is a good solution because it avoids the need for post assembly sealing operations.

The invention will now be explained with reference to figures that only show exemplatory embodiments of the invention.

The figures show:
- Fig. 1: a top view onto a part of a bellows membrane for a gangway having a corner panel membrane according to the invention,
- Fig. 2: a sectional view along the line A - A in Fig. 1 for a first embodiment of the invention,
- Fig. 3: a sectional view along the line A - A in Fig. 1 for a second embodiment of the invention,
- Fig. 4: a sectional view along the line A - A in Fig. 1 for a third embodiment of the invention,
- Fig. 5: a partial view of a gangway according to the invention with four corner profiles and a bellows membrane with a corner panel membrane with four attachment sections being attached to the corner profiles when viewed from the inside,
- Fig. 6: the part of the gangway of Fig. 5 in a view when viewed from the outside and
- Fig. 7: a perspective view of a gangway according to the invention.

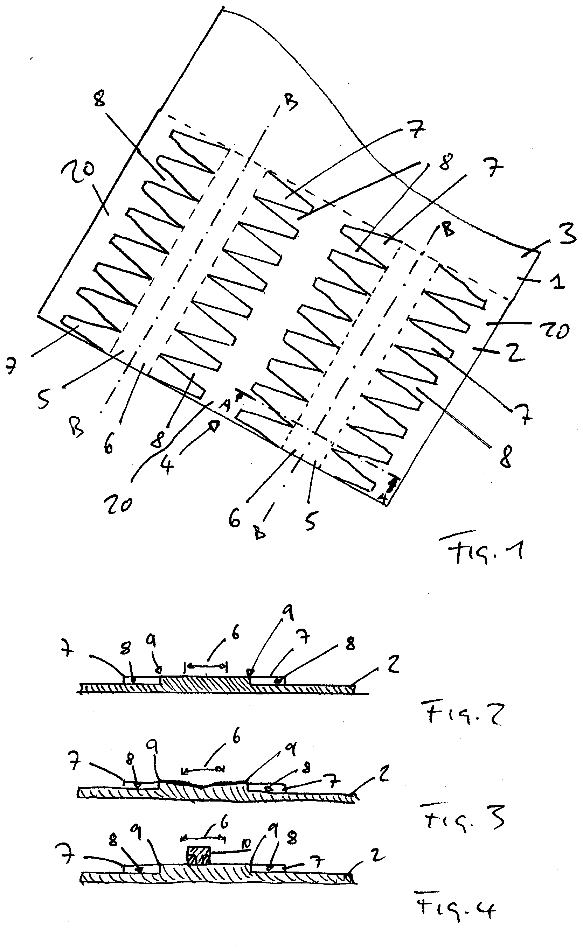

Fig. 1 shows a part of a bellows membrane 1 for a gangway. The bellows membrane 1 has a corner panel membrane 2. The view of Fig. 1 is chosen to show, how a corner panel membrane 2 can be integrated into a bellows membrane 1 in different ways. The dashed line at the top of the corner panel membrane 2 is used to indicate, that a corner panel membrane can be integrated into a bellows membrane as one piece, whereby an additional panel 3 of the bellows membrane 1 is made as one piece with the corner panel membrane for example by moulding these parts in one moulding process. The lower edge 4 of the corner panel membrane 2 is shown to indicate that a corner panel membrane 2 can be integrated into a bellows membrane by attaching the panels that are to form the bellows membrane 1 together at their edges, for example by way of gluing them together. In order to form a continuous bellows membrane 1, an additional panel (not shown in Fig. 1) would be attached to the edge 4 of the corner panel membrane 2 shown in Fig. 1.

The corner panel membrane 2 shown in Fig. 1 has two spine sections 6 extending in a longitudinal direction along the respective axis B - B. Thicker sections 7 of a first thickness border the spine section 6 and propagate in directions perpendicular to the longitudinal direction B - B of the spine section 6. As can be seen from Fig. 1, an embodiment is shown, where thicker sections propagate in directions perpendicular to the longitudinal direction B - B of the spine section 6 on both sides of the spine section 6. The attachment sections also have slimmer sections 8 of a second thickness that is smaller than the first thickness. The slimmer sections 8 also propagate in a direction perpendicular to the longitudinal direction B - B of the spine section. The slimmer sections 8 border a larger section 20 of slim thickness that also forms part of the attachment section 5. The larger section 20 of slim thickness preferably extends parallel to the spine section 6 and could be considered as a second spine section.

The width of the thicker sections 7, which is understood to be the extent of the thicker section in the direction of the longitudinal direction B - B of the spine section, is larger closer to the spine section 6 than further away from the spine section 6. In the embodiment shown in Fig. 1, the thicker sections have the shape of a trapeze, while the slimmer sections 8 have the geometric shape of a triangle, which is why the width of the slimmer section 8, which is understood to be the extent of the slimmer section 8 in the direction of the longitudinal direction B - B of the spine section 6, is smaller closer to the spine section 6 than further away from the spine section 6.

As can be seen in Fig. 1, at least parts of the thicker section 7 interlace with parts of the slimmer sections 8.

Fig. 2 to 4 show different embodiments of a cross section A - A of the corner panel membrane 2 according to the invention. Fig. 2 to 4 are similar in that they show the extent of the spine section 6, show the thicker sections 7 and the slimmer sections 8 as well as the step 9 at the point where the slimmer section 8 borders the thicker section 7. Fig. 2 to 4 are also similar in that they show that the thicker sections 7 and the slimmer sections 8 are of constant thickness.

Fig. 2 to 4 differ in that they show different embodiments of the individual design of the spine section 6.

In the embodiment shown in Fig. 2 it is shown that the spine section 6 has the same thickness as the thicker sections 7. In the embodiment shown in Fig. 3, it is shown that the spine section can have a thickness that changes gradually and for example gets slimmer further away from the border of the spine section 6 with the thicker section 7.

Fig. 4 shows that a ledge 10 (rim) can be attached or be integral to the spine section 6 that extends in a direction perpendicular to the longitudinal axis B - B from the spine section 6. This ledge 10 can be used to reinforce the spine.

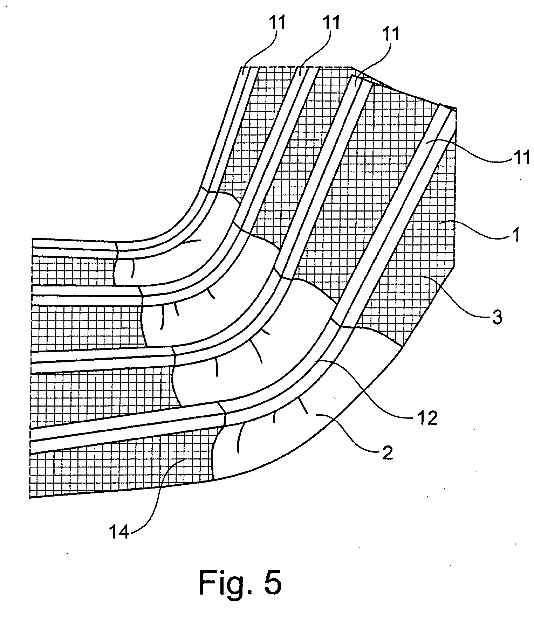

Fig. 5 shows a part of a gangway that has a supporting structure made up of four hoops 11. The hoops 11 each have a corner profile 12. The larger section 20 of slim thickness of an attachment section of the corner panel membrane 2 is attached to the corner profile 12. This is done by inserting parts of the larger section 20 of slim thickness into the inside of the C-shaped corner profile 12 of the respective hoop 11.

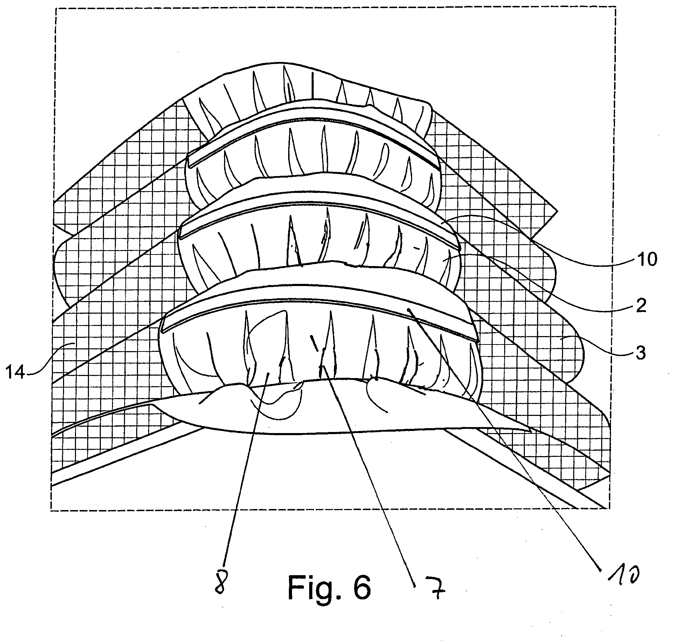

As can be seen from Fig. 5 and also from Fig. 6 that shows an outside view, the slimmer sections 8 provided in the corner panel membrane 2 allow the bellows material to double up and fold, while the thicker sections 7 give the corner panel membrane the shape of an arc-shaped trough.

Fig. 5 also shows that one additional panel 3 forms part of the bellows membrane 1 used to build up the gangway and also an additional panel 14 is attached to the corner panel membrane 2 at the opposite side of the additional panel 3.

The outside view used as Fig. 6 shows, that the ledge 10 can be provided at the outside of the corner panel membrane and used there as additional protection or additional strengthening of the corner panel membrane.

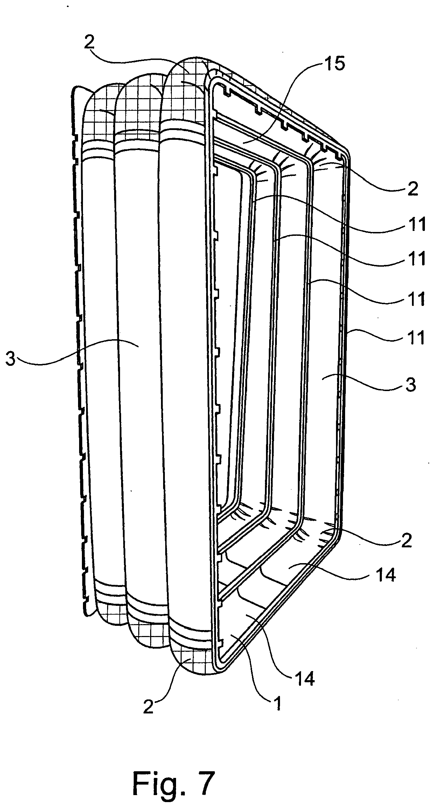

The gangway shown in Fig. 7 shows that a bellows membrane 1 used to make up a gangway according to the invention can have two sub-panels 14 that together form the floor panel of the membrane, can have four corner panel membranes 2, two side panels 3 and a top panel 15 or being attached to each other in a way to form a singular, continuous bellows membrane 1. The bellows membrane 1 only needs to be attached by way of attaching the sub-panels 14 of the floor panel together.

## Claims

1. Corner panel membrane (2) for a bellows membrane (1) for a gangway whereby
• the corner panel membrane (2) has at least one attachment section (5) for attaching the corner panel membrane (2) to a supporting structure of the gangway,
**characterized in that**
• within the attachment section (5) the corner panel membrane (2) has a spine section (6) extending in a longitudinal direction (B-B) and thicker sections (7) of a first thickness that border the spine section (6) and propagate in a direction perpendicular to the longitudinal direction (B-B) of the spine section (6) and slimmer sections (8) of a second thickness that is smaller than the first thickness, whereby the slimmer sections (8) also propagate in a direction perpendicular to the longitudinal direction (B-B) of the spine section,
• whereby the widths of the thicker section (7), which is understood to be the extent of the thicker section (7) in the direction of the longitudinal direction (B-B)of the spine section (6), is larger closer to the spine section (6) than further away from the spine section (6).

2. Corner panel membrane according to claim 1, **characterized in that** the widths of the slimmer section (8), which is understood to be the extend of the slimmer section (8) in the direction of the longitudinal direction (B-B) of the spine section (6), is smaller closer to the spine section (6) than further away from the spine section (6).

3. Corner panel membrane according to claim 1 or 2, **characterized in that** when viewed in the longitudinal direction (B-B) at least parts of the thicker sections (7) interlace with parts of the slimmer sections (8).

4. Corner panel membrane according to any one of claims 1 to 3, **characterized in that** the thicker sections (7) and/or the slimmer sections (8) have the shape of a trapeze or a triangle.

5. Corner panel membrane according to any one of claims 1 to 4, **characterized in that** it is produced by moulding.

6. Corner panel membrane according to any one of claims 1 to 5, **characterized by** three or more attachment sections (5).

7. Bellows membrane (1) for a gangway, **characterized by** a corner panel membrane (2) according to any one of claims 1 to 6 and at least one additional panel (3, 14, 15) of the bellows membrane that borders the corner panel membrane (2).

8. Bellows membrane according to claim 7, **characterized in that** the additional panel (3, 14, 15) is made as one-piece with the corner panel membrane (2) or is attached to the corner panel membrane (2).

9. Gangway with a support structure and a bellows membrane (1) according to any one of claims 7 or 8.

10. Gangway according to claim 9, **characterized in that** the supporting structure has a corner profile (12) and that the slimmer section (8) of the corner panel membrane (2) or a larger section (20) of slim thickness that borders the slimmer section (8) is attached to the corner profile (12).

11. Gangway according to claim 9 or 10, **characterized in that** the thicker sections (7) and slimmer sections (8) of the attachment section (5) that are arranged on one side of the spine section (6) of the attachment section (5) and the thicker sections (7) and slimmer sections (8) of the attachment section (5) that are arranged on the other side of the spine section (6) of the attachment section (5) together with the spine section (6) form an arc-shaped trough.

12. Gangway according to any one of claims 9 to 11, **characterized in that** the corner profile (12) has a c-shaped cross-section, whereby a part of the slimmer section (6) or a larger section (20) of slim thickness of the corner panel membrane (2) is arranged inside the corner profile (12).

## Patentansprüche

1. Eckpaneelmembran (2) für eine Balgmembran (1) für einen Übergang, wobei
• die Eckpaneelmembran (2) mindestens einen Befestigungsabschnitt (5) zur Befestigung der Eckpaneelmembran (2) an einer tragenden Struktur des Übergangs aufweist,
**dadurch gekennzeichnet, dass**
• die Eckpaneelmembran (2) in dem Befestigungsabschnitt (5) einen Rückenabschnitt (6) aufweist, der sich in eine Längsrichtung (B-B) erstreckt, und dickere Abschnitte (7) einer ersten Dicke, die an den Rückenabschnitt (6) angrenzen und sich in eine zu der Längsrichtung (B-B) des Rückenabschnitts (6) senkrechten Richtung ausbreiten, und schmalere Abschnitte (8) einer zweiten Dicke, die kleiner ist als die erste Dicke, wobei sich die schmaleren Abschnitte (8) ebenfalls in eine zu der Längsrichtung (B-B) des Rückenabschnitts senkrechten Richtung ausbreiten,
• wobei die Breite des dickeren Abschnitts (7), bei der es sich um die Erstreckung des dickeren Abschnitts (7) in die Richtung der Längsrichtung (B-B) des Rückenabschnitts (6) handelt, näher an dem Rückenabschnitt (6) größer ist als weiter von dem Rückenabschnitt (6) entfernt.

2. Eckpaneelmembran nach Anspruch 1, **dadurch gekennzeichnet, dass** die Breite des schmaleren Abschnitts (8), bei der es sich um die Erstreckung des schmaleren Abschnitts (8) in die Richtung der Längsrichtung (B-B) des Rückenabschnitts (6) handelt, näher an dem Rückenabschnitt (6) kleiner ist als weiter von dem Rückenabschnitt (6) entfernt.

3. Eckpaneelmembran nach Anspruch 1 oder 2, **dadurch gekennzeichnet, dass** bei einer Betrachtung in die Längsrichtung (B-B) sich zumindest Teile der dickeren Abschnitte (7) mit Teilen der schmaleren Abschnitte (8) kreuzen.

4. Eckpaneelmembran nach einem der Ansprüche 1 bis 3, **dadurch gekennzeichnet, dass** die dickeren Abschnitte (7) und/oder die schmaleren Abschnitte (8) die Form eines Trapezes oder eines Dreiecks besitzen.

5. Eckpaneelmembran nach einem der Ansprüche 1 bis 4, **dadurch gekennzeichnet, dass** die Membran durch Formen hergestellt wird.

6. Eckpaneelmembran nach einem der Ansprüche 1 bis 5, **gekennzeichnet durch** drei oder mehr Befestigungsabschnitte (5).

7. Balgmembran (1) für einen Übergang, **gekennzeichnet durch** eine Eckpaneelmembran (2) nach einem der Ansprüche 1 bis 6 und mindestens ein zusätzliches Paneel (3, 14, 15) der Balgmembran, das an die Eckpaneelmembran (2) angrenzt.

8. Balgmembran nach Anspruch 7, **dadurch gekennzeichnet, dass** das zusätzliche Paneel (3, 14, 15) einteilig mit der Eckpaneelmembran (2) hergestellt ist oder an der Eckpaneelmembran (2) angebracht ist.

9. Übergang mit einer tragenden Struktur und einer Balgmembran (1) nach einem der Ansprüche 7 oder 8.

10. Übergang nach Anspruch 9, **dadurch gekennzeichnet, dass** die tragende Struktur ein Eckprofil (12) aufweist, und dass der schmalere Abschnitt (8) der Eckpaneelmembran (2) oder einer größerer Abschnitt (20) schmaler Dicke, der an den schmaleren Abschnitt (8) angrenzt, an dem Eckprofil (12) angebracht ist.

11. Übergang nach Anspruch 9 oder 10, **dadurch gekennzeichnet, dass** die dickeren Abschnitte (7) und die schmaleren Abschnitte (8) des Befestigungsabschnitts (5), die auf einer Seite des Rückenabschnitts (6) des Befestigungsabschnitts (5) angeordnet sind, und die dickeren Abschnitte (7) und die schmaleren Abschnitte (8) des Befestigungsabschnitts (5), die auf der anderen Seite des Rückenabschnitts (6) des Befestigungsabschnitts (5) angeordnet sind, zusammen mit dem Rückenabschnitt (6) eine bogenförmige Senke bilden.

12. Übergang nach einem der Ansprüche 9 bis 11, **dadurch gekennzeichnet, dass** das Eckprofil (12) einen c-förmigen Querschnitt aufweist, wobei ein Teil des schmaleren Abschnitts (6) oder ein größerer Abschnitt (20) schmaler Dicke der Eckpaneelmembran (2) in dem Eckprofil (12) angeordnet ist.

## Revendications

1. Membrane de panneau de coin (2) pour une membrane de soufflet (1) pour une passerelle,
• la membrane de panneau de coin (2) ayant au moins une section de fixation (5) pour fixer la membrane de panneau de coin (2) à une structure support de la passerelle,
**caractérisée en ce que**
• au sein de la section de fixation (5), la membrane de panneau de coin (2) a une section d'épine dorsale (6) s'étendant dans une direction longitudinale (B-B) et des sections plus épaisses (7) d'une première épaisseur qui bordent la section d'épine dorsale (6) et se propagent dans une direction perpendiculaire à la direction longitudinale (B-B) de la section d'épine dorsale (6) et des sections plus minces (8) d'une deuxième épaisseur qui est plus petite que la première épaisseur, les sections plus minces (8) se propageant également dans une direction perpendiculaire à la direction longitudinale (B-B) de la section d'épine dorsale,
• la largeur de la section plus épaisse (7), qui est comprise comme étant l'étendue de la section plus épaisse (7) dans la direction de la direction longitudinale (B-B) de la section d'épine dorsale (6), étant plus grande plus près de la section d'épine dorsale (6) que plus loin de la section d'épine dorsale (6).

2. Membrane de panneau de coin selon la revendication 1, **caractérisée en ce que** la largeur de la section plus mince (8), qui est comprise comme étant l'étendue de la section plus mince (8) dans la direction de la direction longitudinale (B-B) de la section d'épine dorsale (6), est plus petite plus près de la section d'épine dorsale (6) que plus loin de la section d'épine dorsale (6).

3. Membrane de panneau de coin selon la revendication 1 ou 2, **caractérisée en ce que** lorsqu'elles sont observées dans la direction longitudinale (B-B), au moins des parties des sections plus épaisses (7) s'imbriquent avec des parties des sections plus minces (8).

4. Membrane de panneau de coin selon l'une quelconque des revendications 1 à 3, **caractérisée en ce que** les sections plus épaisses (7) et/ou les sections plus minces (8) ont la forme d'un trapèze ou d'un triangle.

5. Membrane de panneau de coin selon l'une quelconque des revendications 1 à 4, **caractérisée en ce qu'**elle est produite par moulage.

6. Membrane de panneau de coin selon l'une quelconque des revendications 1 à 5, **caractérisée par** trois sections de fixation (5) ou plus.

7. Membrane de soufflet (1) pour une passerelle, **caractérisée par** une membrane de panneau de coin (2) selon l'une quelconque des revendications 1 à 6 et au moins un panneau supplémentaire (3, 14, 15) de la membrane de soufflet qui borde la membrane de panneau de coin (2).

8. Membrane de soufflet selon la revendication 7, **caractérisée en ce que** le panneau supplémentaire (3, 14, 15) est fabriqué d'un seul tenant avec la membrane de panneau de coin (2) ou est fixé à la membrane de panneau de coin (2).

9. Passerelle munie d'une structure support et d'une membrane de soufflet (1) selon l'une quelconque des revendications 7 ou 8.

10. Passerelle selon la revendication 9, **caractérisée en ce que** la structure support a un profil de coin (12) et **en ce que** la section plus mince (8) de la membrane de panneau de coin (2) ou une section plus grande (20) d'épaisseur mince qui borde la section plus mince (8) est fixée au profil de coin (12).

11. Passerelle selon la revendication 9 ou 10, **caractérisée en ce que** les sections plus épaisses (7) et les sections plus minces (8) de la section de fixation (5) qui sont agencées sur un côté de la section d'épine dorsale (6) de la section de fixation (5) et les sections plus épaisses (7) et les sections plus minces (8) de la section de fixation (5) qui sont agencées sur l'autre côté de la section d'épine dorsale (6) de la section de fixation (5) forment conjointement avec la section d'épine dorsale (6) un creux en forme d'arc.

12. Passerelle selon l'une quelconque des revendications 9 à 11, **caractérisée en ce que** le profil de coin (12) a une section transversale en forme de c, une partie de la section plus mince (6) ou une section plus grande (20) d'épaisseur mince de la membrane de panneau de coin (2) étant agencée à l'intérieur du profil de coin (12).
